# EUROPEAN PATENT SPECIFICATION

(11) **EP 1 281 207 B1**
(45) Date of publication and mention of the grant of the patent: **09.03.2016**
(21) Application number: 02705555.7
(22) Date of filing: 11.03.2002
(51) Int. Cl.: H01M 4/48, H01M 4/50, H01M 4/52, H01M 4/04, H01M 10/04

(54) **A POSITIVE ACTIVE MATERIAL FOR LITHIUM SECONDARY BATTERY AND A METHOD OF PREPARING THE SAME**
EIN POSITIV-AKTIVES MATERIAL FÜR LITHIUMSEKUNDÄRBATTERIE UND HERSTELLUNGSVERAFHREN DAFÜR
MATERIAU POSITIF ACTIF POUR BATTERIE SECONDAIRE AU LITHIUM ET SON PROCEDE DE PREPARATION

(30) Priority: 13.03.2001 KR 2001012827
(43) Date of publication of application: 05.02.2003
(73) Proprietor: LG Chem, Ltd., Seoul 150-721 (KR)
(72) Inventor: PARK, Hong-Kyu, Yuseong-ku, Taejeon-city 305-340 (KR); PARK, Seong-Yong, 305-340 Daejeon-city (KR); KWON, Yong-Hoon, 305-340 Daejeon-city (KR); BAE, Joon-Sung, Yuseong-ku, Taejeon-city 305-340 (KR); LEE, Ki-Young, Yuseong-ku, Taejeon-city 305-340 (KR); KIM, Jin-On, Yuseong-ku, Taejeon-city 305-340 (KR)
(74) Representative: Casalonga, Axel
(86) International application number: PCT/KR2002/000419
(87) International publication number: WO 2002/073717

(56) References cited:
- EP-A2- 0 854 526
- EP-A2- 0 973 217
- PATENT ABSTRACTS OF JAPAN & JP 2000 149942 A (TOYOTA CENTRAL RES & DEV LAB INC) 30 May 2000
- PATENT ABSTRACTS OF JAPAN & JP 10 172 569 A (AICHI STEEL WORKS LTD) 26 June 1998

## Description

### CROSS REFERENCE TO RELATED APPLICATION

This application is based on application No. 2001-12827 filed in the Korean Industrial Property Office on March 13, 2001, the content of which is incorporated hereinto by reference.

### BACKGROUND OF THE INVENTION

### (a) Field of the Invention

The present invention relates to a positive active material for a lithium secondary battery and a method of preparing the same, and more particularly, to a positive active material for a lithium or lithium ion secondary battery having improved cycle-life characteristics at room temperature and at a high temperature, and improved storage characteristics at a high temperature, and a method of preparing the same.

### (b) Description of the Related Art

A lithium secondary battery is required to have good cycle-life characteristics, safety characteristics and storage characteristics at a high temperature. An important factor in cycle-life characteristics of a battery is the characteristics of positive and negative active materials. Recently, colossal improvements have been made in the field of negative active material, but there are still a lot of problems in the field of positive active material. Research on positive active material is particularly required, because safety and storage characteristics of a battery at a high temperature are dependant on the characteristics of the positive active material.

A lithium-manganese complex oxide of a spinel structure is a material that is worth consideration, because it is safer than any other positive active material and is comparatively inexpensive. But as charge-discharge cycles advance, the capacity decreases, and its use is greatly restricted, because its capacity greatly decreases with temperature increases, especially over 40° C. Although the above-mentioned problems can be ascribable to many factors, a main reason is that manganese ions of oxidation number 3(Mn³⁺) react heterogeneously and dissolve into electrolyte.

A lot of research is underway to overcome the above-mentioned problems. A representative research approach entails stabilizing the spinel structure by doping the lithium-manganese complex oxide with another metal or coating the surface of the lithium-manganese complex oxide particles with another compound. Although the above-mentioned methods can improve cycle-life characteristics, initial capacity of the spinel compound decreases because the capacity of the spinel compound is proportional to the density of Mn³⁺.

Method of improving the cycle-life characteristics at a high temperature by coating the surface of spinel with Li₂CO₃, Na₂CO₃, K₂CO₃, etc and storing at 60° C is known (U.S. Patent 5,733,685). And although a method of coating the surface of spinel particles with an ion conductive lithium non-crystalline compound is' also known, the above-mentioned methods have not overcome the problem of capacity decrease, nor have they overcome problems of deteriorating cycle-life characteristics at a high temperature.

### SUMMARY OF THE INVENTION

It is an object of the present invention to provide a positive active material for a lithium secondary battery and a preparation method of the same, having improved cycle-life characteristics at room temperature and at a high temperature, and improved storage characteristics at a high temperature. The present invention prohibits manganese from erupting from the lithium manganese spinel oxide and compromising the chemical safety of the overlayer oxide by coating the surface of the lithium manganese spinel oxide with a metal complex oxide to prohibit the oxide of the surface from reacting with electrolyte.

In order to achieve these objects and others, the present invention provides a positive active material for a lithium secondary battery comprising:
a) lithium manganese spinel oxide core particles described by the following Formula 1; and
b) an overlayer of a lithium nickel metal oxide described by the following Formula 2, coated on the above-mentioned core particles of a).

[Formula 1] Li₁₊ₓMn_{2-x-y}M_{y}O_{4+d}

wherein,
M is selected from the group consisting of Ti, V, Cr, Co, Ni, Mg, Zr, Fe, Gd, and Ga;
x is a real number of 0 ∼ 0.12;
y is a real number of 0 ∼ 0.5; and
d is a real number of 0 ∼ 0.04;

[Formula 2] LiNi_{1-z}Me_{z}O₂

wherein,
Me is selected from the group consisting of Ni, Mn, Co, V, Ti, Zr, Cr, Al, Mg, Fe, Cu, Zn, Ga, and Gd; and
z is a real number of 0 ∼ 0.7;

Also, the present invention provides a lithium secondary battery comprising the positive active material.

### BRIEF DESCRIPTION OF THE DRAWINGS

A more complete appreciation of the invention, and many of the attendant advantages thereof, will be readily apparent as the same becomes better understood by reference to the following detailed description when considered in conjunction with the accompanying drawings, wherein:
FIG. 1 is a SEM picture of lithium manganese complex oxide coated with lithium nickel metal complex oxide of Example 1;
FIG. 2 is a graph of results of an EDS (Energy Dispersive X-ray Spectrometer) analysis of the surface of the lithium manganese complex oxide particles shown in FIG. 1;
FIG. 3 is a graph of results of an EDS (Energy Dispersive X-ray Spectrometer) analysis of the inside of the lithium manganese complex oxide particles shown in FIG. 1;
FIG. 4 is a graph illustrating the charge-discharge curve of a cell using the lithium manganese complex oxide coated with lithium nickel metal complex oxide of Example 1 as a positive active material.
FIG. 5 is a graph illustrating cycle-life characteristics at room temperature (25° C) of Examples 1 to 7 and Comparative Examples 1 and 2.
FIG. 6 is a graph illustrating cycle-life characteristics at a high temperature (55° C) of Examples 1 to 7 and Comparative Examples 1 and 2.

### DETAILED DESCRIPTION OF THE INVENTION

In the following detailed description, only the preferred embodiment of the invention has been shown and described, simply by way of illustration of the best mode contemplated by the inventors of carrying out the invention. As will be realized, the invention is capable of modification in various obvious respects, all without departing from the invention. Accordingly, the drawings and description are to be regarded as illustrative in nature, and not restrictive.

The positive active material of the present invention comprises lithium manganese spinel oxide core particles, and an overlayer of lithium nickel metal complex oxide.

Formula 1 shows the lithium manganese spinel oxide. It can intercalate and deintercalate lithium ions, it has a spinel structure, and it has the advantages of good safety characteristics and low price compared with other positive active materials for a lithium secondary battery.

In the lithium nickel metal complex oxide overlayer shown by the Formula 2, it makes no difference whether the quantity of lithium is over the stoichiometric coverage shown by Formula 2. When the lithium nickel metal complex oxide overlayer is used to produce the positive active material, it prohibits electrolyte from reacting with the lithium manganese spinel oxide of the core particles, and therefore it prohibits Mn from erupting from the spinel. Therefore, the overlayer of the lithium nickel metal complex oxide not only improves the cycle-life characteristics at room temperature and at a high temperature, but it also improves the storage characteristics at a high temperature.

The positive active material of the present invention can be manufactured as follows:
a) supplying lithium manganese spinel oxide of the following Formula 1;
b) coating the lithium manganese spinel oxide with an overlayer material compound of the following Formula 2, comprising
   i) a lithium compound;
   ii) a nickel compound; and
   iii) a metal compound comprising metal Me selected from the group consisting of Ni, Mn, Co, V, Ti, Zr, Cr, Al, Mg, Fe, Cu, Zn, Ga, and Gd; and
c) sintering the lithium manganese spinel oxide of a) coated with the overlayer material of b):

   [Formula 1] Li₁₊ₓMn_{2-x-y}M_{y}O_{4+d}

   wherein,
   M is selected from the group consisting of Ti, V, Cr, Co, Ni, Mg, Zr, Fe, Gd, and Ga;
   x is a real number of 0 ∼ 0.12;
   y is a real number of 0 ∼ 0.5; and
   d is a real number of 0 ∼ 0.04;

   [Formula 2] LiNi_{1-z}Me_{z}O₂

   wherein,
   Me is selected from the group consisting of Ni, Mn, Co, V, Ti, Zr, Cr, Al, Mg, Fe, Cu, Zn, Ga, and Gd; and
   z is a real number of 0 ∼ 0.7.

The lithium manganese spinel oxide is the core particle, and it is preferable that the lithium manganese spinel oxide is manufactured by heat-treatment of the lithium compound and the compound comprising the manganese compound under air or a complex gas comprising over 2 wt% of oxygen for 1 to 50 hours at 400 to 900° C. It is preferable that the lithium compound is selected from the group consisting of LiOH, LiOH· H₂O, LiCH₃COO, LiCHO₂, LiCHO₂· H₂O, Li₂SO₄ and LiNO₃, and that the manganese compound is selected from the group consisting of MnO₂, MnCO₂, Mn(CH₃COO)₂, MnSO₄, Mn(NO₃)₂, and Mn(OH)₂.

The core particles selectively comprise metal M as shown in the Formula 1, in a metal compound. The metal M is selected from the group consisting of Ti, V, Cr, Co, Ni, Mg, Zr, Fe, Gd, and the metal compound comprising metal M is selected from the group consisting of carbonate salt, nitrate salt, hydrate salt, acetate salt, citric acid salt and chloride of the metal Me.

The i) lithium compound, ii) nickel compound, and iii) metal compound comprising metal Me are dissolved in water or organic solvent and the resulting material compound of the overlayer is coated on the core particle.

It is preferable that the i) lithium compound is selected from the group consisting of LiOH, LiOH· H₂O, LiCH₃COO, LiCHO₂, LiCHO₂· H₂O, Li₂SO₄ and LiNO₃, and the ii) nickel compound is selected from the group consisting of carbonate salt, nitrate salt, hydrate salt, acetate salt, citric acid salt and chloride of nickel, and the iii) compound comprising metal compound comprising metal Me is selected from the group consisting of carbonate salt, nitrate salt, hydrate salt, acetate salt, citric acid salt and chloride of the metal Me.

It is also preferable that the quantity of the lithium nickel metal complex oxide overlayer produced after the sintering is 0.05 to 50 mol% of the lithium manganese spinel oxide. If the quantity of the lithium nickel metal complex oxide overlayer produced after the sintering is less than 0.05 mol%, there is no improved effect of safety characteristics of the electrolyte, and if it is over 50 mol%, there is no proportionate effect of the coated quantity. The quantity of coating is different according to the composition of the coated lithium nickel metal compound or lithium manganese spinel oxide and respective material, and the purpose of use.

The coating can progress by two methods. One method involves making a slurry by adding the lithium manganese complex oxide powder of the a) step in aqueous solution or organic sol material compound solution, and agitating and heating the slurry for the solvent to evaporate. The overlayer forms on the surface of the core particles as the solvent evaporates.

The other method is by spraying an aqueous solution of the overlayer material compound or sol material of the organic solution on the core particle after making the core particles of the a) step fluid in the air, and drying the solvent. The spraying and drying are preferably done at the same time.

The sintering is preferably done by the following procedure. The coated lithium manganese spinel complex oxide powder is preferably heat-treated at 400 to 900° C under air or a complex gas of which the quantity of oxygen is over 10 wt%, after the coated lithium manganese spinel complex oxide powder is dried in the oven at 50 to 150° C. The volume of the gas per weight and hour is preferably 0.05 to 3.0 l/gH, and heat-treatment time is preferably 1 to 30 hour. The heat treatment time and temperature are preferably selected within the above-mentioned coverage according to purpose, and the overlayer can be partially doped on the surface of the core particles according to the heat-treatment temperature during the heat-treatment procedure.

The lithium manganese complex oxide shown by the Formula 1 is coated with the lithium nickel metal complex compound shown by the Formula 2 through the above-mentioned procedure. The lithium secondary battery having the complex oxide as the positive active material shows good capacity, good cycle-life characteristics at a high temperature and good storage characteristics at a high temperature.

The following Examples are presented to better illustrate the invention, but are not to be construed as limiting the invention to the specific embodiments disclosed.

### Example 1

### (Fabrication of core particles)

Li₂CO₃ and MnO₂ were mixed at a mol ratio of Li to Mn of 0.538 for the fabrication of the spinel lithium manganese complex powder. After the materials were homogeneously mixed, the materials were heat-treated at 480° C for 10 hours in air, and the materials were cooled to fasten the reaction, and spinel powders were fabricated by heat-treatment at 750° C for 20 hours in air. During the heat-treatment procedure, the flow rate of the air was 0.1 l/Gh. The composition of the lithium manganese compound fabricated by the above procedure was Li_{1.05}Mn_{1.95}O₄.

### (Fabrication of material of the overlayer)

LiCH₃COO was used to provide lithium as a material of the overlayer, Ni(CH₃COO)₂ was used to provide Ni, and Co(CH₃COO)₂ was used to provide Co. A homogeneous complex solution of the lithium nickel metal compound was fabricated by agitating the solution in which the materials were dissolved in a non-aqueous alcohol for 30 minutes. The mol ratio of Li:Ni+Co was 1:1, and the mol ratio of Ni:Co was 7:3. Also, the quantity of the overlayer was 1.5 mol% of the lithium manganese spinel oxide of the core particles.

### (Coating)

After a slurry was prepared by adding lithium manganese spinel oxide to the complex solution of the lithium nickel metal compound, the slurry was homogeneously agitated and heated to evaporate the solvent from the slurry and deposit the overlayer.

### (Sintering)

The lithium manganese spinel oxide coated in the coating step was heat-treated at 700° C for 10 hours in a tube-type electric furnace. The heat-treatment was done in air and the flow rate of the air was 0.1 l/Gh.

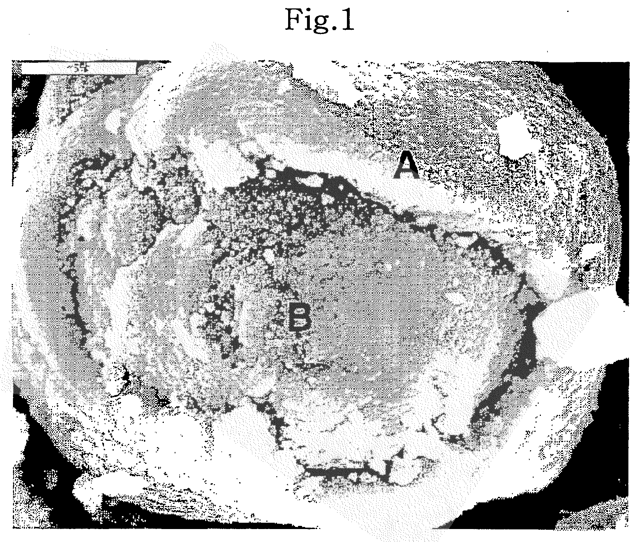

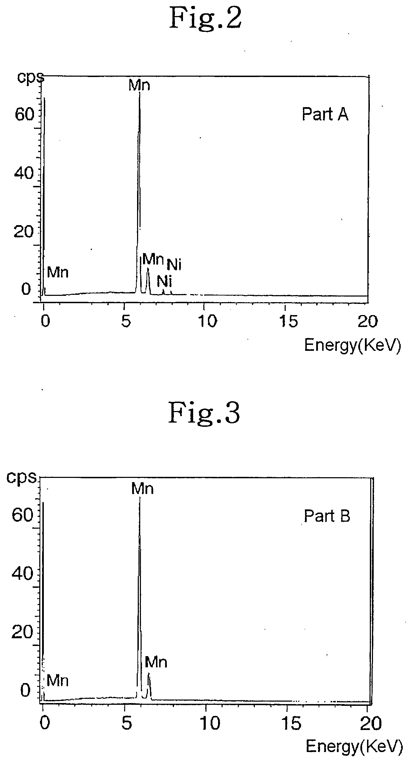

FIG. 1 is a SEM picture of the lithium manganese complex oxide prepared by the above-mentioned procedure, and FIG. 2 shows results of an EDS (Energy Dispersive X-ray Spectrometer) analysis of the surface of the lithium manganese complex oxide particles prepared by the above-mentioned procedure. FIG. 3 shows results of an EDS (Energy Dispersive X-ray Spectrometer) analysis of the inside of the lithium manganese complex oxide particles prepared by the above-mentioned procedure.

Part A in the FIG. 1 represents an overlayer, and part B represents core particles of Ni. One of the composites of the overlayer was detected only on the surface of the particles (part A), and it is known that Ni was not spread to the inside of the particle but rather a new overlayer was formed.

### (Fabrication of test cell)

An electrode was fabricated by using the coated lithium manganese spinel oxide as an active material. Graphite was used as a conductive agent, PVDF (polyvinylidene fluoride) was used as a binder, and the weight ratio of active material:conductive agent:binder was 85 : 10:5.

A slurry was prepared by adding the active material and conductive agent together after the binder was dissolved in NMP (n-methyl pyrrolidone). The prepared slurry was coated on the aluminum foil by a tape casting method, and the positive electrode was prepared by drying the aluminum foil coated with the prepared slurry at 130° C in a vacuum drier for 2 hours.

Lithium metal was used as a negative electrode. A coin cell was fabricated by cutting the positive and negative electrodes to adequate size.

An electrode was used in which a 1 mol LiPF₆ solution was dissolved in a complex solution in which EC (ethylene carbonate) and EMC (ethylmethyl carbonate) were mixed to a 1:2 mol ratio.

### (Test of properties of test cell)

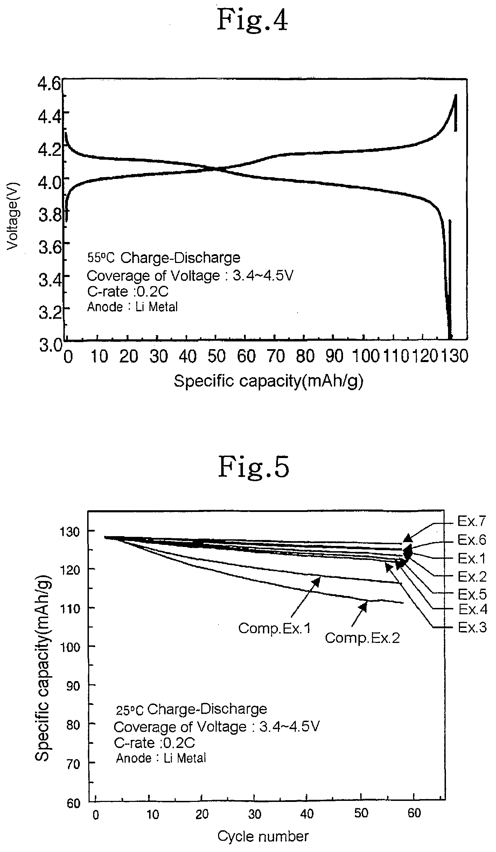

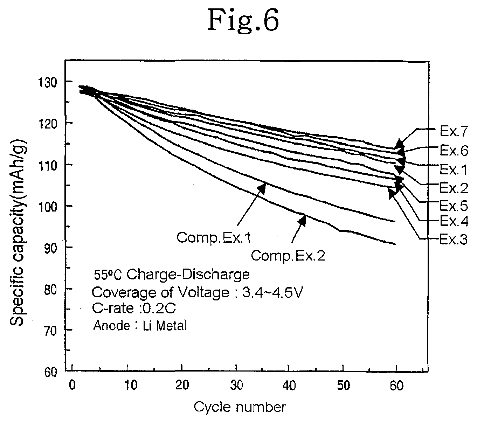

The cell prepared in the previous step was described as LiMn₂O₄/LiPF₆ (1 M) in EC+2EMC/Li, and the charge and discharge characteristics and a cycle-life characteristics were tested. The coverage of the voltage of the charge and discharge was 3.0 to 4.5V in the test of capacity case, and the test results are shown in FIG. 4. The test of cycle-life characteristics was done between 3.4 and 4.3V, and the cycle-life characteristics at room temperature are shown in FIG. 5, and the cycle-life characteristics at a high temperature are shown in FIG. 6. The storage characteristics at a high temperature were tested by discharge capacity from 4.3V charge at 60° C, and the test results are shown in TABLE 1.

### Example 2

The positive electrode and test cell were prepared and tested by the same method as in Example 1, except that the mole ratio of Ni and Co of the composite of the overlayer was 4:6.

### Example 3

The positive electrode and test cell were prepared and tested by the same method as in Example 1, except that the composite of the overlayer was LiNi_{0.7}V_{0.3}O₂.

### Example 4

The positive electrode and test cell were prepared and tested by the same method as in Example 1, except that the quantity of the overlayer was 0.5 mol% of the lithium manganese spinel oxide of the core particle.

### Example 5

The positive electrode and test cell were prepared and tested by the same method as in Example 1, except that the coated lithium manganese spinel oxide was heat-treated at 400° C for 10 hours in air.

### Example 6

LiCH₃COO and Mn(CH₃COO)₂ were mixed at the mol ratio of Li to Mn of 0.538 for the fabrication of spinel lithium manganese complex oxide powder. After the LiCH₃COO and Mn(CH₃COO)₂ were homogeneously mixed and heat-treated at 480° C for 10 hours in air, the materials were cooled and remixed to fasten the reaction, and spinel powders were fabricated by heat-treatment at 700° C for 20 hours in air. During the heat-treatment procedure, the flow rate of the air was 0.1 l/gh. The composition of the lithium manganese compound fabricated by the above procedure was Li_{1.05}Mn_{1.95}O₄

The prepared lithium manganese spinel compound was coated, sintered and used as the positive active material by the same method as in Example 1, and the positive electrode and test cell were prepared by the same method as in Example 1.

### Example 7

The positive electrode and test cell were prepared by the same method as in Example 6, except that the mole ratio of Ni and Co of the composite of the overlayer was 4:6.

### Comparative Example 1

The positive electrode and test cell were prepared by the same method as in Example 1, except that the lithium manganese spinel compound Li_{1.05}Mn_{1.95}O₄ of Example 1 was used as the positive active material without coating with the material of the overlayer.

### Comparative Example 2

The positive electrode and test cell were prepared by the same method as in Example 1, except that the non-coated lithium manganese spinel compound Li_{1.05}Mn_{1.95}O₄ of Example 6 was used as the positive active material

**TABLE 1**

| | Mean specific capacity after 2 cycles (mAh/g) | Decrease ratio of capacity at 60° C after 1 week |
|---|---|---|
| Example 1 | 126.7 | 8 |
| Example 2 | 127 | 10.6 |
| Example 3 | 127.3 | 15.2 |
| Example 4 | 127.5 | 16.4 |
| Example 5 | 127.4 | 20.5 |
| Example 6 | 126.5 | 7.5 |
| Example 7 | 126.1 | 5.5 |
| Comparative Example 1 | 128.5 | 24.7 |
| Comparative Example 2 | 129.2 | 32.8 |

FIG. 5 is a graph illustrating capacity variation according to cycles, that is, cycle-life characteristics at room temperature (25° C), and FIG. 6 is a graph illustrating cycle-life characteristics at a high temperature (55° C). The Examples 1 to 7 of the present invention showed better cycle-life characteristics than Comparative Examples 1 and 2.

The storage characteristics at a high temperature was tested by measuring the decrease ratios of the test cells after the test cells were charged and discharged after 1 week at 60° C to the charged condition of 4.3V. As shown in TABLE 1, the storage characteristics of Examples 1 to 7 were better than Comparative Examples 1 and 2. Therefore, the storage characteristics of a secondary battery comprising the active material of the present invention are shown to be great.

The positive active material of the present invention shows improved safety characteristics by coating the lithium manganese spinel oxide with a lithium nickel metal complex oxide, and a secondary battery comprising the positive active material shows high capacity and, cycle-life characteristics at room temperature and at a high temperature, and improved storage characteristics at a high temperature.

While the present invention has been described in detail with reference to the preferred embodiments, those skilled in the art will appreciate that various modifications and substitutions can be made thereto without departing from the scope of the present invention as set forth in the appended claims.

## Claims

1. A positive active material for a lithium secondary battery comprising
a) lithium manganese spinel oxide of core particles described by the following Formula 1; and
b) an overlayer of a lithium nickel metal oxide described by the following Formula 2, coating on the above-mentioned core particles of a);
[Formula 1] Li₁₊ₓMn_{2-x-y}M_{y}O_{4+d}
wherein,
M is selected from the group consisting of Ti, V, Cr, Co, Ni, Mg, Zr, Fe, Gd, and Ga,
x is a real number of 0 ∼ 0.12;
y is a real number of 0 ∼ 0.5; and
d is a real number of 0 ∼ 0.04;
[Formula 2] LiNi_{1-z}Me_{z}O₂
wherein,
Me is selected from the group consisting of Ni, Mn, Co, V, Ti, Zr, Cr, Al, Mg, Fe, Cu, Zn, Ga, and Gd; and
z is a real number of 0 ∼ 0.7.

2. The positive active material of claim 1 wherein a quantity of the overlayer of b) is 0.05 ∼ 50 mol% of the core particles of a).

3. A preparation method of a positive active material for a lithium secondary battery comprising;
a) supplying lithium manganese spinel oxide of the following Formula 1;
b) coating the lithium manganese spinel oxide of a) with an overlayer material compound of the following Formula 2, comprising:
i) a lithium compound;
ii) a nickel compound; and
iii) a metal compound comprising metal Me selected from the group consisting of Ni, Mn, Co, V, Ti, Zr, Cr, Al, Mg, Fe, Cu, Zn, Ga, and Gd; and
c) sintering the lithium manganese spinel oxide of a) coated with the overlayer material of b);
[Formula 1] Li₁₊ₓMn_{2-x-y}M_{y}O_{4+d}
wherein,
M is selected from the group consisting of Ti, V, Cr, Co, Ni, Mg, Zr, Fe, Gd, and Ga;
x is a real number of 0 ∼ 0.12;
y is a real number of 0 ∼ 0.5; and
d is a real number of 0 ∼ 0.04;
[Formula 2] LiNi_{1-z}Me_{z}O₂
wherein,
Me is selected from the group consisting of of Ni, Mn, Co, V, Ti, Zr, Cr, Al, Mg, Fe, Cu, Zn, Ga, and Gd; and
z is a real number of 0 ∼ 0.7.

4. The preparation method of claim 3 wherein the lithium manganese spinel oxide of a) is made by heating a mixture of a lithium compound selected from the group consisting of
LiOH, LiOH· H₂O, LiCH₃COO, LiCHO₂, LiCHO₂· H₂O, Li₂SO₄· and LiNO₃; and a
manganese compound selected from the group consisting of MnO₂, MnCO₂, Mn(CH₃COO)₂, MnSO₄, Mn(NO₃)₂, and Mn(OH)₂ under the condition of air or a complex gas comprising over 2 wt% of oxygen for 1 to 50 hours at 400 to 900° C.

5. The preparation method of claim 4 wherein the lithium manganese spinel oxide further comprises a metal compound comprising metal M selected from the group consisting Ni, Mn, Co, V, Ti, Zr, Cr, Al, Mg, Fe, Cu, Zn, Ga, and Gd.

6. The preparation method of claim 5 wherein the metal compound comprising metal M is selected from the group consisting of carbonate salt, nitrate salt, hydrate salt, sulfate salt, acetate salt, citric acid salt and chloride of metal M.

7. The preparation method of claim 3 wherein the lithium compound of b) is selected from the group consisting of LiOH, LiOH· H₂O, LiCH₃COO, LiCHO₂, LiCHO₂· H₂O, Li₂SO₄ and LiNO₃

8. The preparation method of claim 3 wherein the nickel compound of b) is selected from the group consisting of carbonate salt, nitrate salt, hydrate salt, sulfate salt, acetate salt, citric acid salt and chloride of nickel.

9. The preparation method of claim 3 wherein the metal compound comprising metal Me of b) is selected from the group consisting of carbonate salt, nitrate salt, hydrate salt, sulfate salt, acetate salt, citric acid salt and chloride of Me.

10. The preparation method of claim 3 wherein the overlayer material of compound by the following Formula 2 is coated on the lithium manganese spinel oxide to make a quantity of the overlayer produced after the sintering of c) to be 0.05 to 50 mol% of the lithium manganese spinel oxide.
[Formula 2] LiNi_{1-z}Me_{z}O₂
wherein,
Me is selected from the group consisting of Ni, Co, V, Ti, Zr, Cr, Al, Cu, Zn, Ga, and Gd; and
z is a real number of 0 ∼ 0.7.

11. The preparation method of claim 3 wherein the sintering of c) is done by heat-treating the coated lithium manganese complex oxide under 0.05 to 3.0 l/gH of air or complex gas of over 10 wt% of oxygen for 1 to 30 hours at 400 to 900° C.

12. A lithium secondary battery comprising the positive active material of claim 1.

## Patentansprüche

1. Positiv-aktives Material für eine Lithiumsekundärbatterie, umfassend:
a) Lithium-Mangan-Spinelloxid von Kernpartikeln, das durch die nachstehende Formel 1 beschrieben wird; und
b) eine Deckschicht aus einem Lithium-Nickel-Metalloxid, das durch die nachstehende Formel 2 beschrieben wird, als Beschichtung auf den obengenannten Kernpartikeln von a);
[Formel 1] Li₁₊ₓMn_{2-x-y}M_{y}O_{4+d}
worin
M aus der aus Ti, V, Cr, Co, Ni, Mg, Zr, Fe, Gd und Ga bestehenden Gruppe ausgewählt ist,
x eine reale Zahl von 0 ∼ 0,12 ist;
y eine reale Zahl von 0 ∼ 0,5 ist; und
d eine reale Zahl von 0 ∼ 0,04 ist;
[Formel 2] LiNi_{1-z}Me_{z}O₂
worin
Me aus der aus Ni, Mn, Co, V, Ti, Zr, Cr, Al, Mg, Fe, Cu, Zn, Ga und Gd bestehenden Gruppe ausgewählt ist; und
z eine reale Zahl von 0 ∼ 0,7 ist.

2. Positiv-aktives Material nach Anspruch 1, wobei eine Menge der Deckschicht von b) 0,05 ∼ 50 mol-% der Kernpartikel von a) beträgt.

3. Herstellungsverfahren für ein positiv-aktives Material für eine Lithiumsekundärbatterie, mit den folgenden Schritten:
a) Zuführen von Lithium-Mangan-Spinelloxid der nachstehenden Formel 1;
b) Beschichten des Lithium-Mangan-Spinelloxids von a) mit einer Deckschichtmaterialverbindung der nachstehenden Formel 2, umfassend:
i) eine Lithiumverbindung;
ii) eine Nickelverbindung; und
iii) eine Metallverbindung, die das Metall Me aus der aus Ni, Mn, Co, V, Ti, Zr, Cr, Al, Mg, Fe, Cu, Zn, Ga und Gd bestehenden Gruppe umfasst; und
c) Sintern des mit dem Deckschichtmaterial von b) beschichteten Lithium-Mangan-Spinelloxids von a);
[Formel 1] Li₁₊ₓMn_{2-x-y}M_{y}O_{4+d}
worin
M aus der aus Ti, V, Cr, Co, Ni, Mg, Zr, Fe, Gd und Ga bestehenden Gruppe ausgewählt ist;
x eine reale Zahl von 0 ∼ 0,12 ist;
y eine reale Zahl von 0 ~ 0,5 ist; und
d eine reale Zahl von 0 ~ 0,04 ist;
[Formel 2] LiNi_{1-z}Me_{z}O₂
worin
Me aus der aus Ni, Mn, Co, V, Ti, Zr, Cr, Al, Mg, Fe, Cu, Zn, Ga und Gd bestehenden Gruppe ausgewählt ist; und
z eine reale Zahl von 0 ~ 0,7 ist.

4. Herstellungsverfahren nach Anspruch 3, wobei das Lithium-Mangan-Spinelloxid von a) hergestellt wird durch Erhitzen einer Mischung einer Lithiumverbindung, die aus der aus LiOH, LiOH, H₂O, LiCH₃COO, LiCHO₂, LiCHO₂· H₂O, Li₂SO₄ und LiNO₃ bestehenden Gruppe ausgewählt ist; und
einer Manganverbindung, die aus der aus MnO₂, MnCO₂, Mn(CH₃COO)₂, MnSO₄, Mn(NO₃)₂ und Mn(OH)₂ bestehenden Gruppe ausgewählt ist, unter Luft oder einem komplexen Gas, das über 2 Gew.-% Sauerstoff umfasst, für 1 bis 50 Stunden bei 400 bis 900 °C.

5. Herstellungsverfahren nach Anspruch 4, wobei das Lithium-Mangan-Spinelloxid ferner eine Metallverbindung umfasst, die das aus der aus Ni, Mn, Co, V, Ti, Zr, Cr, Al, Mg, Fe, Cu, Zn, Ga und Gd bestehenden Gruppe ausgewählte Metall M umfasst.

6. Herstellungsverfahren nach Anspruch 5, wobei die das Metall M umfassende Metallverbindung aus der aus Carbonatsalz, Nitratsalz, Hydratsalz, Sulfatsalz, Acetatsalz, Zitronensäuresalz und Chlorid von Metall M bestehenden Gruppe ausgewählt ist.

7. Herstellungsverfahren nach Anspruch 3, wobei die Lithiumverbindung von b) aus der aus LiOH, LiOH · H₂O, LiCH₃COO, LiCHO₂, LiCHO₂ · H₂O, Li₂SO₄ und LiNO₃ bestehenden Gruppe ausgewählt ist.

8. Herstellungsverfahren nach Anspruch 3, wobei die Nickelverbindung von b) aus der aus Carbonatsalz, Nitratsalz, Hydratsalz, Sulfatsalz, Acetatsalz, Zitronensäuresalz und Nickelchlorid bestehenden Gruppe ausgewählt ist.

9. Herstellungsverfahren nach Anspruch 3, wobei die das Metall Me von b) umfassende Metallverbindung aus der aus Carbonatsalz, Nitratsalz, Hydratsalz, Sulfatsalz, Acetatsalz, Zitronensäuresalz und Me-Chlorid bestehenden Gruppe ausgewählt ist.

10. Herstellungsverfahren nach Anspruch 3, wobei die Deckschichtmaterialverbindung der folgenden Formel 2 auf das Lithium-Mangan-Spinelloxid aufgetragen ist, so dass eine Menge der nach dem Sintern von c) hergestellten Deckschicht 0,05 bis 50 mol-% des Lithium-Mangan-Spinelloxids beträgt.
[Formel 2] LiNi_{1-z}Me_{z}O₂
worin
Me aus der aus Ni, Co, V, Ti, Zr, Cr, Al, Cu, Zn, Ga nd Gd bestehenden Gruppe ausgewählt ist; und
z eine reale Zahl von 0 ∼ 0,7 ist.

11. Herstellungsverfahren nach Anspruch 3, wobei das Sintern von c) durch Wärmebehandlung des beschichteten Lithium-Mangan-Komplexoxids unter 0,05 bis 3,0 l/gH Luft oder einem komplexen Gas mit über 10 Gew.-% Sauerstoff für 1 bis 30 Stunden bei 400 bis 900 °C erfolgt.

12. Lithiumsekundärbatterie, die das positiv-aktive Material nach Anspruch 1 umfasst.

## Revendications

1. Matière active positive pour une batterie secondaire au lithium, comprenant :
a) de l'oxyde spinelle de lithium-manganèse de particules noyaux décrit par la Formule 1 ci-après; et
b) une couche de recouvrement d'un oxyde métallique de lithium-nickel décrit par la Formule 2 ci-après, déposée sur les particules noyaux précitées de a);
[Formule 1] Li₁₊ₓMn_{2-x-y}M_{y}O_{4+d}
où
M est sélectionné dans le groupe constitué de Ti, V, Cr, Co, Ni, Mg, Zr, Fe, Gd et Ga,
x est un nombre réel de 0 ∼ 0,12;
y est un nombre réel de 0 ∼ 0,5; et
d est un nombre réel de 0 ∼ 0,04;
[Formule 2] LiNi_{1-z}Me_{z}O₂
où
Me est sélectionné dans le groupe constitué de Ni, Mn, Co, V, Ti, Zr, Cr, Al, Mg, Fe, Cu, Zn, Ga et Gd; et
z est un nombre réel de 0 ∼ 0,7.

2. Matière active positive selon la revendication 1, où une quantité de la couche de recouvrement de b) est 0,05 ∼ 50 % molaire des particules noyaux de a).

3. Procédé de préparation d'une matière active positive pour une batterie secondaire au lithium, comprenant :
a) la mise en place d'un oxyde spinelle de lithium-manganèse de la Formule 1 ci-après;
b) le revêtement de l'oxyde spinelle de lithium-manganèse de a) avec un composé de matière de recouvrement de la Formule 2 ci-après, comprenant :
i) un composé de lithium;
ii) un composé de nickel; et
iii) un composé métallique comportant un métal Me sélectionné dans le groupe constitué de Ni, Mn, Co, V, Ti, Zr, Cr, Al, Mg, Fe, Cu, Zn, Ga et Gd; et
c) le frittage de l'oxyde spinelle de lithium-manganèse de a) revêtu de la matière de recouvrement de b);
[Formule 1] Li₁₊ₓMn_{2-x-y}M_{y}O_{4+d}
où
M est sélectionné dans le groupe constitué de Ti, V, Cr, Co, Ni, Mg, Zr, Fe, Gd et Ga;
x est un nombre réel de 0 ∼ 0,12;
y est un nombre réel de 0 ∼ 0,5; et
d est un nombre réel de 0 ∼ 0,04;
[Formule 2] LiNi_{1-z}Me_{z}O₂
où
Me est sélectionné dans le groupe constitué de Ni, Mn, Co, V, Ti, Zr, Cr, Al, Mg, Fe, Cu, Zn, Ga et Gd; et
z est un nombre réel de 0 ∼ 0,7.

4. Procédé de préparation selon la revendication 3, où l'oxyde spinelle de lithium-manganèse de a) est obtenu par chauffage d'un mélange d'un composé de lithium sélectionné dans le groupe constitué de
LiOH, LiOH · H₂O, LiCH₃COO, LiCHO₂, LiCHO₂ · H₂O, Li₂SO₄ et LiNO₃; et un
composé de manganèse sélectionné dans le groupe constitué de MnO₂, MnCO₂, Mn(CH₃COO)₂, MnSO₄, Mn(NO₃)₂ et Mn(OH)₂ sous condition d'air ou d'un gaz complexe comportant plus de 2 % en poids d'oxygène pendant 1 à 50 heures à 400 à 900 °C.

5. Procédé de préparation selon la revendication 4, où l'oxyde spinelle de lithium-manganèse comprend en outre un composé métallique comportant un métal M sélectionné dans le groupe constitué de Ni, Mn, Co, V, Ti, Zr, Cr, Al, Mg, Fe, Cu, Zn, Ga et Gd.

6. Procédé de préparation selon la revendication 5, où le composé métallique comportant un métal M est sélectionné dans le groupe constitué de sel de carbonate, sel de nitrate, sel d'hydrate, sel de sulfate, sel d'acétate, sel d'acide citrique et chlorure de métal M.

7. Procédé de préparation selon la revendication 3, où le composé de lithium de b) est sélectionné dans le groupe constitué de LiOH, LiOH · H₂O, LiCH₃COO, LiCHO₂, LiCHO₂ · H₂O, Li₂SO₄ et LiNO₃.

8. Procédé de préparation selon la revendication 3, où le composé de nickel de b) est sélectionné dans le groupe constitué de sel de carbonate, sel de nitrate, sel d'hydrate, sel de sulfate, sel d'acétate, sel d'acide citrique et chlorure de nickel.

9. Procédé de préparation selon la revendication 3, où le composé métallique comprenant le métal Me de b) est sélectionné dans le groupe constitué de sel de carbonate, sel de nitrate, sel d'hydrate, sel de sulfate, sel d'acétate, sel d'acide citrique et chlorure de Me.

10. Procédé de préparation selon la revendication 3, où la matière de la couche de recouvrement du composé de la Formule 2 ci-après est déposée sur l'oxyde spinelle de lithium-manganèse pour faire en sorte qu'une quantité de la couche de recouvrement soit produite après le frittage de c) qui corresponde à 0,05 à 50 % molaire de l'oxyde spinelle de lithium-manganèse.
[Formule 2] LiNi_{1-z}Me_{z}O₂
où
Me est sélectionné dans le groupe constitué de Ni, Co, V, Ti, Zr, Cr, Al, Cu, Zn, Ga et Gd; et
z est un nombre réel de 0 ∼ 0,7.

11. Procédé de préparation selon la revendication 3, où le frittage de c) est réalisé par traitement thermique de l'oxyde complexe de lithium-manganèse revêtu, sous 0,05 à 3,0 l/gH d'air ou de gaz complexe à plus de 10 % en poids d'oxygène pendant 1 à 30 heures à 400 à 900 °C.

12. Batterie secondaire au lithium comportant la matière active positive selon la revendication 1.
